# EUROPÄISCHE PATENTSCHRIFT

(11) **EP 4 121 724 B1**
(45) Veröffentlichungstag und Bekanntmachung des Hinweises auf die Patenterteilung: **31.01.2024**
(21) Anmeldenummer: 21710468.6
(22) Anmeldetag: 08.03.2021
(51) Int. Cl.: G01F 1/84

(54) **VERFAHREN ZUM BETREIBEN EINES CORIOLIS-MESSGERÄTS**
METHOD FOR OPERATING A CORIOLIS MEASURING DEVICE
PROCÉDÉ D'UTILISATION D'UN DISPOSITIF DE MESURE À EFFET CORIOLIS

(30) Priorität: 20.03.2020 DE 102020107711
(43) Veröffentlichungstag der Anmeldung: 25.01.2023
(73) Patentinhaber: Endress + Hauser Flowtec AG, 4153 Reinach (CH)
(72) Erfinder: ZHU, Hao, 85354 Freising (DE)
(74) Vertreter: Hahn, Christian
(86) Internationale Anmeldenummer: PCT/EP2021/055737
(87) Internationale Veröffentlichungsnummer: WO 2021/185610

(56) Entgegenhaltungen:
- WO-A1-2010/040625
- DE-A1-102018 114 796
- US-A1- 2011 178 738
- US-A1- 2019 242 737

## Beschreibung

Die Erfindung betrifft ein Verfahren zum Betreiben eines Coriolis-Messgerät auf eine störungsresistente Art und Weise.

Coriolis-Messgeräte mit erhöhter Ausfallsicherheit sind in der WO98/52000 vorgeschlagen, wobei statt zweier Coriolis-Sensoren zwecks Erfassung von Messrohrschwingungen eine Anordnung von drei solcher Sensoren gelehrt wird. Bei Ausfall eines Sensors kann somit der Betrieb des CoriolisMessgeräts mit den verbleibenden Sensoren aufrechterhalten werden.

Jedoch wirken sich nicht nur mechanische Ausfälle auf ein Funktionieren eines Coriolis- Messgeräts aus, sondern auch nachteilhafte Umgebungsbedingungen, wie beispielsweise lokale Magnetfelder, oder, wie in der (ebenfalls ein Coriolis-Messgeräte mit drei Schwingungssensoren zeigenden) DE 10 2018 114 796 erörtert, bei Medien, welch in einem Hauptbestandteil flüssig sind, jedoch aber auch gasförmige und/oder feste Medienbestandteile aufweisen.

Aufgabe der Erfindung ist es daher, ein Verfahren zum Betreiben eines Coriolis-Messgeräts vorzuschlagen, mittels welchem Störungen erkannt werden können.

Die Aufgabe wird gelöst durch ein Verfahren gemäß dem unabhängigen Anspruch 1. Bei einem erfindungsgemäßen Verfahren zum Betreiben eines Coriolis-Messgeräts zur Bestimmung eines Massedurchflusses und/oder einer Dichte eines durch eine Rohrleitung strömenden Mediums umfassend:
zumindest ein Messrohr mit einem Einlauf und einem Auslauf, wobei das Messrohr bezüglich einer durch einen Messrohrquerschnitt verlaufenden Symmetrieebene symmetrisch ist;
mindestens einen Schwingungserreger zum Erzeugen von Messrohrschwingungen,
wobei das Messrohr bei Massedurchfluss dazu eingerichtet ist, eine Coriolis-Mode mit einem Schwingungsknoten im Bereich der Symmetrieebene auszubilden,
wobei das Coriolis-Messgerät einen ersten Schwingungssensor, einen zweiten Schwingungssensor und einen dritten Schwingungssensor aufweist, welche dazu eingerichtet sind, Messrohrschwingungen zu erfassen, wobei die Schwingungssensoren entlang einer Messrohrmittenlinie an jeweils verschiedenen Stellen angeordnet sind,
wobei der erste Schwingungssensor relativ zum Schwingungsknoten auf einer Einlaufseite des Messrohrs angeordnet ist, und wobei der zweite Schwingungssensor relativ zum Schwingungsknoten auf einer Auslaufseite des Messrohrs angeordnet ist, und wobei der dritte Schwingungssensor im Bereich des Schwingungsknotens angeordnet ist,
wobei der erste Schwingungssensor und der zweite Schwingungssensor symmetrisch bezüglich der Symmetrieebene angeordnet sind,
umfasst das Verfahren folgende Verfahrensschritte:
   Bestimmen einer Dämpfung der Messrohrschwingungen,
   Messen einer ersten Messgröße mittels der Messsignale des ersten Schwingungssensors und des dritten Schwingungssensors,
   Messen einer zweiten Messgröße mittels der Messsignale des zweiten Schwingungssensors und des dritten Schwingungssensors,
   Bestimmen eines Einflusses der Dämpfung auf die erste Messgröße sowie auf die zweite Messgröße und Korrigieren von Messwerten der ersten Messgröße und Messwerten der zweiten Messgröße.

Bilden von Differenzen von Messwerten der ersten Messgröße und Messwerten der zweiten Messgröße, so dass sich ein Einfluss des Massedurchflusses auf die Differenzen aufhebt,
Überprüfen einer Korrespondenz zwischen der Differenz und der Dämpfung.

Die aufgeführten Verfahrensschritte müssen dabei nicht streng nach der hier gezeigten Reihenfolge ausgeführt werden. Reihenfolgen sind dabei im Wesentlichen an Kausalität gebunden. Beispielsweise das Messen der ersten Messgröße sowie der zweiten Messgröße kann auch gleichzeitig erfolgen.

Ein wesentlicher Punkt des Verfahrens ist, dass Messrohrschwingungen in Bereich des ersten Schwingungssensors und im Bereich des zweiten Schwingungssensors jeweils durch das Medium gegenüber dem Schwingungserreger gedämpft bzw. verzögert werden. Dies kann beispielsweise auf eine Viskosität des Mediums zurückgeführt werden. Bei einer Messung einer Messgröße mittels des ersten Schwingungssensors und des zweiten Schwingungssensors durch Differenzbildung von Messsignalen der Schwingungssensoren bzw. von aus den Messsignalen abgeleiteten Messwerten fällt der Beitrag der Schwingungsdämpfung bzw. Schwingungsverzögerung weg.

Bei einer entsprechenden Messung einer Messgröße mittels des ersten Schwingungssensors oder zweiten Schwingungssensors jeweils mit dem dritten Schwingungssensor fällt der Beitrag der Schwingungsdämpfung bei geeigneter Differenzbildung nicht weg, da der dritte Schwingungssensor strikt der Bewegung des Schwingungserregers folgt. Auf diese Weise kann ein direkter Messwert für die symmetrische Schwingungsdämpfung bestimmt werden. Im Falle einer Abwesenheit von wesentlichen Störungen korrespondiert der direkte Messwert der symmetrischen Schwingungsdämpfung zum Erwartungswert der Dämpfung bzw. der Phasenverzögerung.

Korrespondenz kann beispielsweise dadurch ermittelt werden, dass aus der Dämpfung ein Erwartungswert für die Differenz von Messwerten der ersten Messgröße und Messwerten der zweiten Messgröße berechnet und mit dem tatsächlichen Wert der Differenz verglichen wird, oder dadurch dass aus der Differenz ein Erwartungswert für eine Dämpfung berechnet und mit dem bestimmten Wert der Dämpfung verglichen wird.

In einer Ausgestaltung kann der Schwingungserreger als dritter Schwingungssensor ausgestaltet sein, wobei der Schwingungserreger beispielsweise zeitweise als Schwingungssensor genutzt wird.

In einer Ausgestaltung wird bei Abweichung der Differenzen vom Erwartungswert eine Art der Störung ermittelt wird, wobei ein Vorliegen einer Abweichung einer Asymmetrie von Messsignalen der Schwingungssensoren von einem Referenzwert geprüft wird, wobei die Prüfung Amplituden der Messsignale berücksichtigt. Eine vollständige Symmetrie der Messsignale von Schwingungssensoren ist aus praktischen Gründen nur sehr selten der Fall. Daher wird beispielsweise bei Inbetriebnahme des Coriolis-Messgeräts ein Referenzwert einer Asymmetrie bestimmt, welcher einen Anfangszustand des Coriolis-Messgeräts beschreibt.

Falls eine Messsignalamplitude des ersten oder zweiten Schwingungssensors nicht mit Messsignalamplituden der anderen Schwingungssensoren korrespondiert, wird dies als ein Vorliegen einer Asymmetrie gewertet. Eine solche Korrespondenz kann beispielsweise mittels eines Grenzwerts für die Abweichungen entschieden werden. Beispielsweise falls ein Betrag einer Abweichung einen Grenzwert überschreitet, kann dies als mangelnde Korrespondenz aufgefasst werden.

In einer Ausgestaltung wird bei Vorliegen einer Asymmetrie eine Massedurchflussmessung auf ein ungestörtes Paar Schwingungssensoren gestützt wird.

Falls eine Messsignalamplitude des ersten oder zweiten Schwingungssensors nicht mit Messsignalamplituden der anderen Schwingungssensoren korrespondiert, kann dies als ein Hinweis auf eine Fehlfunktion oder Störung gewertet werden.

In einer Ausgestaltung wird der Einfluss der Dämpfung auf Messwerte der ungestörten ersten Messgröße oder zweiten Messgröße korrigiert. Auf diese Weise kann eine Massedurchflussmessung basierend auf einem ungestörten Paar Schwingungssensoren mit guter Genauigkeit durchgeführt werden.

In einer Ausgestaltung wird bei der Bestimmung des gestörten Schwingungssensors eine Messsignalamplitude des dritten Schwingungssensors berücksichtigt, um eine Plausibilität von einer Messsignalamplitude des ersten Schwingungssensors und einer Messignalamplitude des zweiten Schwingungssensors zu ermitteln.

In einer Ausgestaltung wird bei Vorliegen des Referenzwerts der Abweichung aus einem Maß einer Nichtkorrespondenz zwischen der Differenz und der Dämpfung eine Wirkungsgradminderung des

Schwingungserregers oder des Schwingungssensors festgestellt und insbesondere kompensiert. Das Maß kann dabei auf einer Absolut- oder Relativabweichung basieren. Die Wirkungsgradminderung kann beispielsweise durch eine Alterung eines Magneten des Schwingungserregers verursacht sein. Das Vorliegen des Referenzwerts kann über eine Maximalabweichung definiert sein. Der Fachmann wird ohne Probleme einen sinnvollen Wert wählen.

Eine Nichtkorrespondenz kann dadurch ermittelt werden, dass aus der Dämpfung ein Erwartungswert für die Differenz berechnet und mit dem tatsächlichen Wert der Differenz verglichen wird. Eine Nichtkorrespondenz kann dadurch ermittelt werden, dass aus der Differenz ein Erwartungswert für eine Dämpfung berechnet und mit dem bestimmten Wert der Dämpfung verglichen wird.

In einer Ausgestaltung wird die Dämpfung durch ein Verhältnis Anregestrom des Schwingungserregers zu bestimmter Schwingungsamplitude eines Schwingungssensors bestimmt.

In einer Ausgestaltung ist die erste Messgröße und die zweite Messgröße jeweils eine Phasendifferenz oder eine davon abgeleitete Messgröße wie beispielsweise Zeitdifferenz oder Massedurchfluss.

In einer Ausgestaltung wird, falls die Abweichung eine Zeitkonstante kleiner als ein Monat und insbesondere kleiner als eine Woche aufweist, die Störung als durch ein externes Magnetfeld im Bereich eines Schwingungssensors verursacht interpretiert.

In einer Ausgestaltung weisen die Schwingungssensoren sowie der Schwingungserreger jeweils ein Magnetsystem und ein Spulensystem aufweisen, welches Magnetsystem und Spulensystem parallel zu einer Schwingungsrichtung relativ zueinander beweglich sind.

Ein Magnetsystem umfasst dabei zumindest einen Magneten, ein Spulensystem umfasst dabei zumindest eine Spule.

In einer Ausgestaltung weist das Coriolis-Messgerät eine elektronische Mess-/Betriebsschaltung aufweist, welche den Schwingungserreger betreibt, Messsignale der Schwingungssensoren auswertet, Verfahrensschritte ausführt sowie Messwerte von Messgrößen des Coriolis-Messgerät berechnet und bereitstellt.

In einer Ausgestaltung wird bei Abweichung der Differenzen vom Erwartungswert eine Warnmeldung ausgegeben

Im Folgenden wird die Erfindung anhand von Ausführungsbeispielen beschrieben.
Fig. 1 skizziert ein beispielhaftes erfindungsgemäßes Coriolis-Messgerät;
Fig. 2 skizziert Einflüsse auf eine Messrohrschwingung;
Fig. 3 skizziert ein beispielhaftes Paar Messrohre;
Fig. 4 skizziert einen Ablauf eines beispielhaften erfindungsgemäßen Verfahrens.

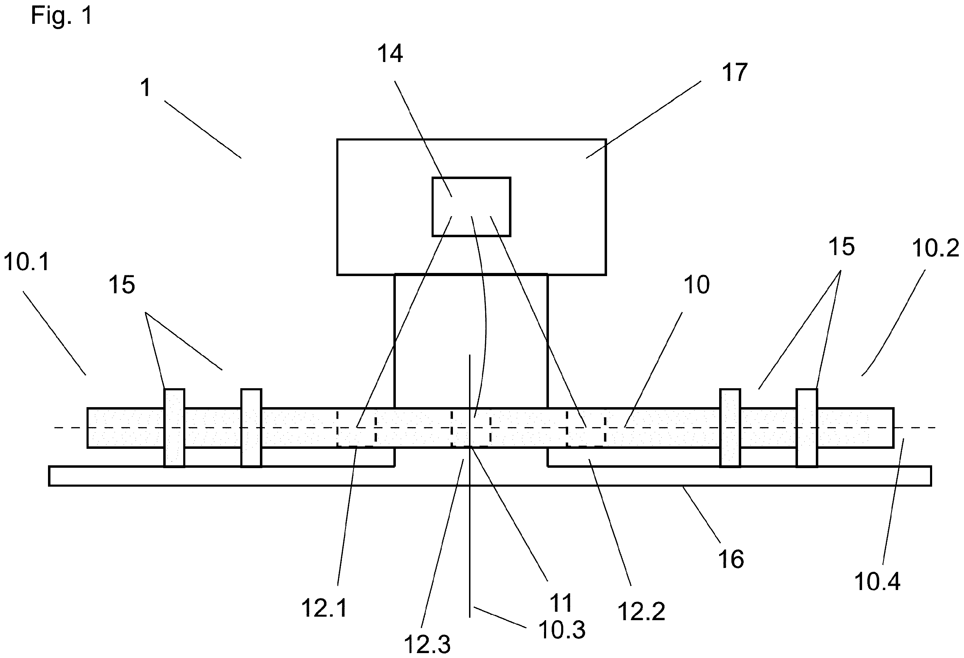

Fig. 1 skizziert eine Seitenansicht auf ein beispielhaftes Coriolis-Messgerät 1 mit zwei Messrohren 10, Fixierelementen 15, einem Trägerkörper 16 zum Tragen der Messrohre, einer elektronischen Mess-/Betriebsschaltung 14 zum Betreiben des Erregers sowie zum Erfassen von durch die Sensoren erzeugten Messsignalen und zum Bereitstellen von Messwerten der Dichte bzw. des Massedurchflusses sowie einem Gehäuse 17 zum Behausen der elektronischen Mess-/Betriebsschaltung. Schwingungserreger 11 sowie Schwingungssensoren 12 sind mit gestrichelten Linien dargestellt, da sie zwischen den Messrohren angeordnet sind. Fixierelemente 15 sind dazu eingerichtet, Schwingungsknoten von Messrohrschwingungen zu definieren, sie sind dem Fachmann bekannt. Anzahl und Ausgestaltung von solchen Fixierelementen wird der Fachmann gemäß seinen Bedürfnissen einrichten.

Das Coriolis-Messgerät weist einen einlaufseitigen ersten Schwingungssensor 12.1, einen auslaufseitigen zweiten Schwingungssensor 12.2 sowie einen dritten Schwingungssensor 12.3 auf, wobei der dritte Schwingungssensor zwischen dem ersten Schwingungssensor und dem zweiten Schwingungssensor bezüglich einer Messrohrmittenlinie 10.4 auf Höhe des Schwingungserregers 11 angeordnet ist. Der dritte Schwingungssensor erfasst somit die durch den Schwingungserreger erzeugte Schwingungsbewegung. Die Messrohre sind dabei jeweils bezüglich einer durch jeweils einen Messrohrquerschnitt verlaufenden Symmetrieebene 10.3 symmetrisch zu einer Spiegelung an der Symmetrieebene.

Coriolis-Messgeräte sind dabei weder auf zwei Messrohre noch auf gerade Messrohre beschränkt. Coriolis-Messgeräte können beliebig viele Messrohre, insbesondere auch nur ein Messrohr oder 4 Messrohre aufweisen. Die Messrohre können auch bogenförmig ausgestaltet sein.

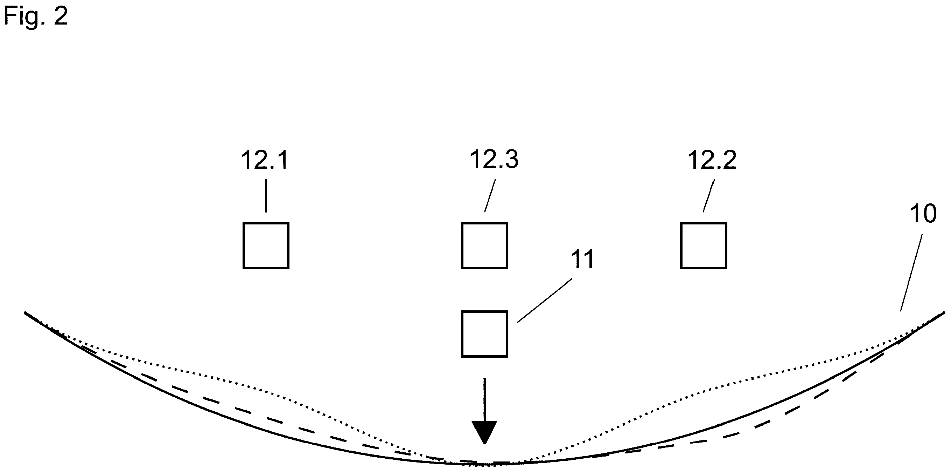

Fig. 2 skizziert verschiedene Einflüsse auf eine Messrohrschwingung. Die Anordnung der Schwingungssensoren 12.1 bis 12.3 sowie des Schwingungserregers 11 in der Grafik sind rein schematisch und dienen allein der Verdeutlichung der Positionierung entlang einer Messrohrmittenlinie.

Die durchgezogene Linie entspricht einer idealisierten Messrohrverformung ohne Coriolis-Effekt, ohne Dämpfungseffekt sowie mit nur schematischer Berücksichtigung einer Randfixierung.

Der bei einem Massedurchfluss durch das Messrohr auftretende Coriolis-Effekt bewirkt eine Verformung der Messrohrschwingung wie durch die gestrichelte Linie dargestellt. Auf der Einlaufseite im Bereich des ersten Schwingungssensors bewirkt der Coriolis-Effekt ein beispielsweise Nachlaufen, auf der Auslaufseite im Bereich des zweiten Schwingungssensors bewirkt der Coriolis-Effekt dann ein Vorauseilen der Messrohrschwingung gegenüber einer Messrohrschwingung ohne Coriolis-Effekt. Dies kann durch Bestimmen von Messsignalphasen der Schwingungssensoren erfasst werden. Beispielsweise eine Differenzbildung von Messsignalphasen kann zur Messung des Coriolis-Effekts und somit zu einer Massedurchflussbestimmung herangezogen werden.

Eine Schwingungsdämpfung hervorgerufen beispielsweise durch eine Viskosität des Mediums bewirkt beim ersten Schwingungssensor und beim zweiten Schwingungssensor ein Nachlaufen relativ zum dritten Schwingungssensor bzw. Schwingungserreger. Dieses Phänomen wird symmetrische Schwingungsdämpfung genannt. Bei Kenntnis eines schwingungsdämpfenden Effekts des Mediums bzw. der Viskosität kann ein Erwartungswert des Nachlaufens bzw. der entsprechenden Phasenverzögerung bzw. der entsprechenden Dämpfung bestimmt werden. Dabei wird ein Verhältnis Anregestrom des Schwingungserregers zu bestimmter Schwingungsamplitude eines Schwingungssensors bestimmt.

Durch Messen einer ersten Messgröße mittels der Messsignale des ersten Schwingungssensors und des dritten Schwingungssensors, und Messen einer zweiten Messgröße mittels der Messsignale des zweiten Schwingungssensors und des dritten Schwingungssensors, und Differenzbildung von Messwerten der ersten Messgröße mit Messwerten der zweiten Messgröße, so dass sich Einflüsse durch den Massedurchfluss aufheben, bleibt ohne Störung der Schwingung nur der Einfluss der symmetrischen Schwingungsdämpfung bestehen. Um den Einfluss des Massedurchflusses aufzuheben und die symmetrische Schwingungsdämpfung zu verstärken, kann beispielsweise im Fall, dass die erste Messgröße und die zweite Messgröße Differenzen von Messsignalen der Schwingungssensoren sind, eine Differenz der ersten Messgröße und der zweiten Messgröße gebildet werden. Beispielsweise kann die erste Messgröße eine Phasendifferenz zwischen erstem Schwingungssensor 12.1 und drittem Schwingungssensor 12.3 und die zweite Messgröße eine Phasendifferenz zwischen drittem Schwingungssensor 12.3 und zweitem Schwingungssensor 12.2 sein. Eine Differenzbildung der ersten Messgröße und zweiten Messgröße entspricht dann der Summe der Phasen des ersten Schwingungssensors und zweiten Schwingungssensors abzüglich das Doppelte der Phase des dritten Schwingungssensors. Anstatt einer Phasendifferenz kann auch eine davon abgeleitete Messgröße wie beispielsweise Zeitdifferenz oder Massedurchfluss verwendet werden. Auf diese Weise kann ein direkter Messwert für die symmetrische Schwingungsdämpfung bestimmt werden. Im Falle einer Abwesenheit von wesentlichen Störungen korrespondiert der direkte Messwert der symmetrischen Schwingungsdämpfung zum Erwartungswert der Dämpfung bzw. der Phasenverzögerung.

Falls der direkte Messwert und der Erwartungswert nicht korrespondieren, kann dies als ein Vorliegen einer Störung gewertet werden. Dies kann beispielsweise durch eine

Messsignalverfälschung des ersten Schwingungssensors oder des zweiten Schwingungssensors durch ein externes Magnetfeld gegeben sein. Beispielsweise kann aber auch eine Alterung eines Magnets des ersten Schwingungssensors oder des zweiten Schwingungssensors oder des Schwingungserregers vorliegen.

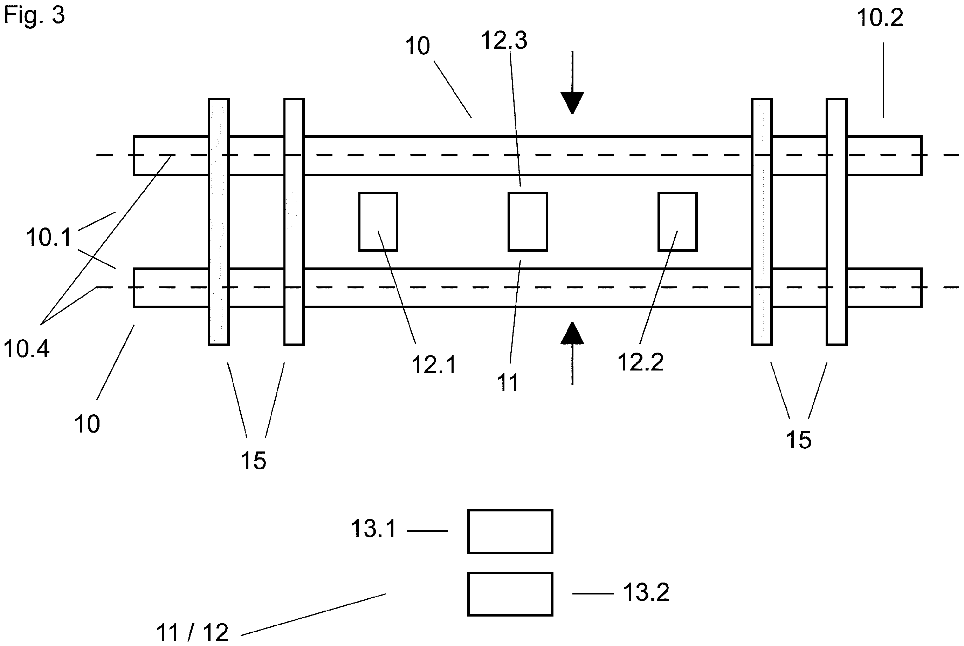

Fig. 3 skizziert ein beispielhaftes Paar Messrohre 10 eines erfindungsgemäßen Coriolismessgeräts mit einem ersten Schwingungssensor 12.1, einem zweiten Schwingungssensor 12.2, einem dritten Schwingungssensor 12.3 und einem Schwingungserreger 11, wobei dritter Schwingungssensor und Schwingungserreger bezüglich der Messrohrmittenlinien 10.4 an einer gleichen Position angeordnet sind. Der Schwingungserreger ist dazu eingerichtet, die Messrohre des Messrohrpaars gegeneinander schwingen zu lassen. Auf diese Weise heben sich in den Messrohren entstehende Kräfte auf und ein vibrationsarmer Betrieb wird ermöglicht. Die Schwingungssensoren sowie der Schwingungserreger können dabei wie hier angedeutet jeweils ein Spulensystem 13.2 sowie ein Magnetsystem 13.1 aufweisen, welche relativ zueinander beweglich sind und dazu eingerichtet sind, elektromagnetisch zu wechselwirken. Beispielsweise kann das Spulensystem an einem ersten Messrohr angeordnet sein und dessen Schwingungsbewegungen folgen, und das Magnetsystem an einem zweiten Messrohr angeordnet sein und dessen Schwingungsbewegungen folgen. Bei der Schwingungserregung wird dabei mittels eines Spulenstroms eine Kraft auf das zugehörige Magnetsystem ausgeübt. Bei der Schwingungserfassung bewirkt die Relativbewegung eine elektromagnetische Induktion im Spulensystem, welche als Messsignal verwendet werden kann. Anordnungsmöglichkeiten und Ausgestaltungsmöglichkeiten von Schwingungssensoren und Schwingungserreger relativ zu dem mindestens einen Messrohr sind dem Fachmann bekannt.

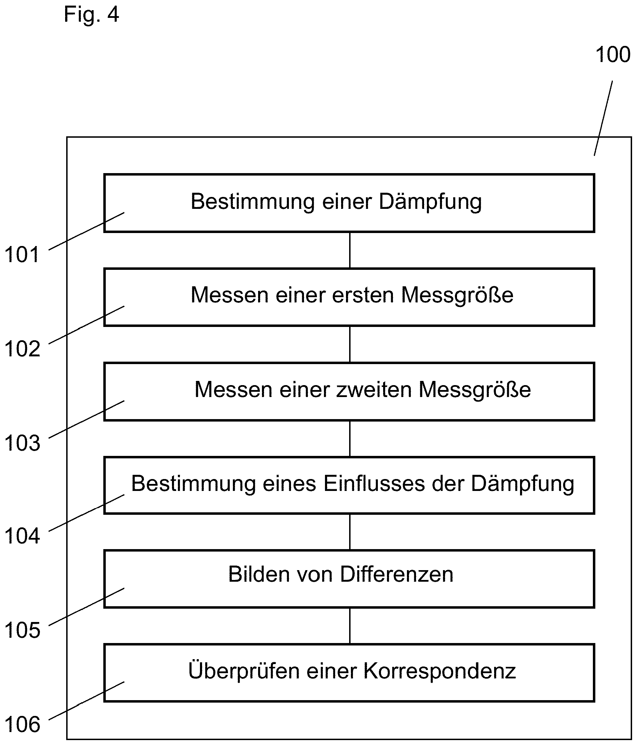

Fig. 4 skizziert den Ablauf eines beispielhaften erfindungsgemäßen Verfahrens.

Das Verfahren 100 umfasst folgende Verfahrensschritte:
In einem Verfahrensschritt 101 wird eine Dämpfung der Messrohrschwingungen bestimmt,
In einem Verfahrensschritt 102 wird eine erste Messgröße mittels der Messsignale des ersten Schwingungssensors und des dritten Schwingungssensors gemessen,
In einem Verfahrensschritt 103 wird eine zweite Messgröße mittels der Messsignale des zweiten Schwingungssensors und des dritten Schwingungssensors gemessen,
In einem Verfahrensschritt 104 wird ein Einfluss der Dämpfung auf die erste Messgröße sowie auf die zweite Messgröße bestimmt,
In einem Verfahrensschritt 105 werden von Differenzen von Messwerten der ersten Messgröße und Messwerten der zweiten Messgröße gebildet,
In einem Verfahrensschritt 106 werden die Differenzen mit einem aus der Dämpfung abgeleiteten Erwartungswert verglichen.

Die aufgeführten Verfahrensschritte müssen dabei nicht streng nach der hier gezeigten Reihenfolge ausgeführt werden. Reihenfolgen sind dabei im Wesentlichen an Kausalität gebunden.

Ein wesentlicher Punkt des Verfahrens ist, dass Messrohrschwingungen in Bereich des ersten Schwingungssensors und im Bereich des zweiten Schwingungssensors jeweils durch das Medium gegenüber dem Schwingungserreger gedämpft bzw. verzögert werden. Dies kann beispielsweise auf eine Viskosität des Mediums zurückgeführt werden. Bei einer Messung einer Messgröße mittels des ersten Schwingungssensors und des zweiten Schwingungssensors durch Differenzbildung von Messsignalen der Schwingungssensoren bzw. von aus den Messsignalen abgeleiteten Messwerten fällt der Beitrag der Schwingungsdämpfung bzw. Schwingungsverzögerung weg. Bei einer entsprechenden Messung einer Messgröße mittels des ersten Schwingungssensors oder zweiten Schwingungssensors jeweils mit dem dritten Schwingungssensor fällt der Beitrag der Schwingungsdämpfung nicht weg, da der dritte Schwingungssensor strikt der Bewegung des Schwingungserregers folgt. Siehe dazu auch Fig. 2. Bei bekannter Dämpfung kann ein Erwartungswert der Verzögerung bzw. Dämpfung im Bereich des ersten Schwingungssensors sowie im Bereich des zweiten Schwingungssensors bestimmt werden. Der Erwartungswert der Dämpfung kann dabei über ein Verhältnis Anregestrom des Schwingungserregers zu bestimmter Schwingungsamplitude eines Schwingungssensors bestimmt werden.

### Bezugszeichenliste

- 1: Coriolis-Messgerät
- 10: Messrohr
- 10.1: Einlauf
- 10.2: Auslauf
- 10.3: Symmetrieebene
- 10.4: Messrohrmittenlinie
- 11: Schwingungserreger
- 12.1: erster Schwingungssensor
- 12.2: zweiter Schwingungssensor
- 12.3: dritter Schwingungssensor
- 13.1: Magnetsystem
- 13.2: Spulensystem
- 14: elektronische Mess-/Betriebsschaltung
- 15: Fixierelement
- 16: Trägerkörper
- 17: Gehäuse
- 100: Verfahren
- 101: Bestimmung einer Dämpfung
- 102: Messen einer ersten Messgröße
- 103: Messen einer zweiten Messgröße
- 104: Bestimmen eines Einflusses der Dämpfung
- 105: Bilden von Differenzen
- 106: Vergleich der Differenzen

## Patentansprüche

1. Verfahren (100) zum Betreiben eines Coriolis-Messgeräts (1) zur Bestimmung eines Massedurchflusses und/oder einer Dichte eines durch eine Rohrleitung strömenden Mediums, welches Coriolis-Messgerät (1) umfaßt:
zumindest ein Messrohr (10) mit einem Einlauf (10.1) und einem Auslauf (10.2), wobei das Messrohr bezüglich einer durch einen Messrohrquerschnitt verlaufenden Symmetrieebene (10.3) symmetrisch ist;
mindestens einen Schwingungserreger (11) zum Erzeugen von Messrohrschwingungen,
einen ersten Schwingungssensor (12.1), einen zweiten Schwingungssensor (12.2) und einen dritten Schwingungssensor (12.3), welche Schwingungssensoren dazu eingerichtet sind, Messrohrschwingungen zu erfassen, wobei die Schwingungssensoren entlang einer Messrohrmittenlinie (10.4) an jeweils verschiedenen Stellen angeordnet sind, insb. derart, daß der erste Schwingungssensor und der zweite Schwingungssensor symmetrisch bezüglich der Symmetrieebene angeordnet sind,
wobei das Messrohr bei Massedurchfluss eine Coriolis-Mode mit einem Schwingungsknoten im Bereich der Symmetrieebene ausbildet,
wobei der erste Schwingungssensor relativ zum Schwingungsknoten auf einer Einlaufseite des Messrohrs angeordnet ist,
wobei der zweite Schwingungssensor relativ zum Schwingungsknoten auf einer Auslaufseite des Messrohrs angeordnet ist,
und wobei der dritte Schwingungssensor im Bereich des Schwingungsknotens angeordnet ist,
wobei das Verfahren (100) folgende Verfahrensschritte umfasst:
Messen einer ersten Messgröße mittels der Messsignale des ersten Schwingungssensors und des dritten Schwingungssensors (102)
und Messen einer zweiten Messgröße mittels der Messsignale des zweiten Schwingungssensors und des dritten Schwingungssensors (103),
**dadurch gekennzeichnet, daß das Verfahren folgende weitere Verfahrensschritte umfaßt:**
Bestimmen einer Dämpfung der Messrohrschwingungen (101),
Bestimmen eines Einflusses der Dämpfung auf die erste Messgröße sowie auf die zweite Messgröße (104),
Bilden von Differenzen von Messwerten der ersten Messgröße und Messwerten der zweiten Messgröße (105), so dass sich ein Einfluss des Massedurchflusses auf die Differenzen aufhebt,
Überprüfen einer Korrespondenz zwischen der Differenz und der Dämpfung (106).

2. Verfahren nach Anspruch 1,
wobei bei Nichtkorrespondenz eine Art der Störung ermittelt wird,
wobei ein Vorliegen einer Abweichung einer Asymmetrie von Messsignalen der Schwingungssensoren von einem Referenzwert der Asymmetrie geprüft wird, wobei die Prüfung Amplituden der Messsignale berücksichtigt.

3. Verfahren nach Anspruch 2,
wobei bei Vorliegen der Abweichung eine Massedurchflussmessung auf ein ungestörtes Paar Schwingungssensoren (12.1, 12.2, 12.3) gestützt wird.

4. Verfahren nach Anspruch 3,
wobei der Einfluss der Dämpfung auf Messwerte der ungestörten ersten Messgröße oder zweiten Messgröße korrigiert wird.

5. Verfahren nach einem der Ansprüche 3 oder 4,
wobei bei der Bestimmung des gestörten Schwingungssensors eine Messsignalamplitude des dritten Schwingungssensors (12.3) herangezogen wird, um eine Plausibilität von einer Messsignalamplitude des ersten Schwingungssensors und eine Messignalamplitude des zweiten Schwingungssensors zu ermitteln.

6. Verfahren nach einem der Ansprüche 2 bis 5,
wobei bei Vorliegen des Referenzwerts der Abweichung aus einem Maß einer Nichtkorrespondenz zwischen der Differenz und der Dämpfung eine Wirkungsgradminderung des Schwingungserregers (11) oder des Schwingungssensors (12.1, 12.2) festgestellt und insbesondere kompensiert wird.

7. Verfahren nach einem der vorigen Ansprüche,
wobei die Dämpfung durch ein Verhältnis Anregestrom des Schwingungserregers (11) zu bestimmter Schwingungsamplitude eines Schwingungssensors (12.1, 12.2, 12.3) bestimmt wird.

8. Verfahren nach einem der vorigen Ansprüche,
wobei die erste Messgröße und die zweite Messgröße jeweils eine Phasendifferenz oder eine davon abgeleitete Messgröße wie beispielsweise Zeitdifferenz oder Massedurchfluss ist.

9. Verfahren nach einem der vorigen Ansprüche 2 bis 8,
wobei falls die Abweichung eine Zeitkonstante kleiner als ein Monat und insbesondere kleiner als eine Woche aufweist, die Störung als durch ein externes Magnetfeld im Bereich eines Schwingungssensors verursacht interpretiert wird.

10. Verfahren nach einem der vorigen Ansprüche,
wobei die Schwingungssensoren (12.1, 12.2, 12.3) sowie der Schwingungserreger (11) jeweils ein Magnetsystem (13.1) und ein Spulensystem (13.2) aufweisen, welches Magnetsystem und Spulensystem parallel zu einer Schwingungsrichtung relativ zueinander beweglich sind.

11. Verfahren nach einem der vorigen Ansprüche,
wobei das Coriolis-Messgerät (1) eine elektronische Mess-/Betriebsschaltung (14) aufweist, welche den Schwingungserreger betreibt, Messsignale der Schwingungssensoren auswertet, Verfahrensschritte ausführt sowie Messwerte von Messgrößen des Coriolis-Messgerät berechnet und bereitstellt.

12. Verfahren nach einem der vorigen Ansprüche,
wobei bei Abweichung der Differenzen von Messwerten der ersten Messgröße und Messwerten der zweiten Messgröße von einem Erwartungswert für die Differenz von Messwerten der ersten Messgröße und Messwerten der zweiten Messgröße berechnet eine Warnmeldung ausgegeben wird.

## Claims

1. Method (100) to operate a coriolis meter (1) for determining a mass flow and/or a density of a medium flowing through a pipe that encompasses a coriolis meter (1), comprising:
at least one measuring tube (10) with an inlet (10.1) and an outlet (10.2), wherein the measuring tube is symmetrical relative to a plane of symmetry (10.3) running through a measuring tube cross-section;
at least one vibration exciter (11) for generating measuring tube vibrations,
a first vibration sensor (12.1), a second vibration sensor (12.2), and a third vibration sensor (12.3), wherein the vibration sensors are configured to record measuring tube vibrations, wherein the vibration sensors are arranged at various points along a measuring tube center line (10.4), in particular in such a way that the first vibration sensor and the second vibration sensor are arranged symmetrically relative to the plane of symmetry,
wherein the measuring tube forms a coriolis mode during mass flow with a vibration node in the area of the plane of symmetry,
wherein the first vibration sensor is arranged on an inlet side of the measuring tube relative to the vibration node,
wherein the second vibration sensor is arranged on an outlet side of the measuring tube relative to the vibration node,
and wherein the third vibration sensor is arranged in the area of the vibration node, wherein the method (100) encompasses the following process steps:
measurement of a first measured variable using the measurement signals of the first vibration sensor and of the third vibration sensor (102), as well as measurement of a second measured variable using the measurement signals of the second vibration sensor and of the third vibration sensor (103),
**characterized in that the method encompasses the following further process steps:**
determination of a damping of the measuring tube vibrations (101),
determination of an influence of the damping on the first measured variable, as well as on the second measured variable (104),
formation of differences in measured values of the first measured variable and measured values of the second measured variable (105), so that an influence of the mass flow on the differences is canceled out,
check for correspondence between the difference and the damping (106).

2. Method according to claim 1,
wherein a type of flow is determined in the event of non-correspondence,
wherein any variance from an asymmetry of measurement signals of the vibration sensors is checked against a reference value for asymmetry, wherein the check takes into account amplitudes of the measurement signals.

3. Method according to claim 2,
wherein a mass flow measurement is based on an undisturbed pair of vibration sensors (12.1, 12.2, 12.3) if the variance is present.

4. Method according to claim 3,
wherein the influence of the damping on measured values of the undisturbed first measured variable or second measured variable is corrected.

5. Method according to one of the claims 3 or 4,
wherein a measurement signal amplitude of the third vibration sensor (12.3) is applied when identifying the disturbed vibration sensor in order to determine a plausibility from a measurement signal amplitude of the first vibration sensor and a measurement signal amplitude of the second vibration sensor.

6. Method according to one of the claims 2 to 5,
wherein when the reference value of the variance based on a degree of non-correspondence between the difference and damping is present, a reduction in efficiency of the vibration exciter (11) or the vibration sensor (12.1, 12.2) is determined and, in particular, compensated.

7. Method according to one of the preceding claims,
wherein the damping is determined via a ratio of the excitement current of the vibration exciter (11) to a specific vibration amplitude of a vibration sensor (12.1, 12.2, 12.3).

8. Method according to one of the preceding claims,
wherein the first measured variable and the second measured variable are each a phase difference or a measured variable derived from this, such as a time difference or mass flow.

9. Method according to one of the claims 2 to 8,
wherein if the variance exhibits a time constant of less than one month, and in particular of less than one week, the flow is interpreted as having been caused by an external magnetic field in the area of a vibration sensor.

10. Method according to one of the preceding claims,
wherein the vibration sensors (12.1, 12.2, 12.3), as well as the vibration exciter (11) each exhibit one magnet system (13.1) and one coil system (13.2), wherein the magnet system and coil system can be moved relative to one another parallel to a direction of vibration.

11. Method according to one of the preceding claims,
wherein the coriolis meter (1) exhibits an electronic measuring/operating circuit (14) that operates the vibration exciter, evaluates measurement signals from the vibration sensors, executes process steps, as well as calculating and making available measured values from the coriolis meter.

12. Method according to one of the preceding claims,
wherein a warning message is issued in the event of variance in the differences of measured values of the first measured variable and measured values of the second measured variable from an expected value, and a calculation is performed to determine the difference in measured values of the first measured variable and measured values of the second measured variable.

## Revendications

1. Procédé (100) pour l'exploitation d'un débitmètre Coriolis (1) destiné à la détermination d'un débit massique et/ou d'une densité d'un produit s'écoulant dans une conduite, lequel débitmètre (1) comprend :
au moins un tube de mesure (10) avec une entrée (10.1) et une sortie (10.2), le tube de mesure étant symétrique par rapport à un plan de symétrie (10.3) s'étendant à travers une section transversale du tube de mesure ;
au moins un excitateur de vibrations (11) destiné à générer les vibrations du tube de mesure,
un premier capteur de vibrations (12.1), un deuxième capteur de vibrations (12.2) et un troisième capteur de vibrations (12.3), lesquels capteurs de vibrations sont conçus pour détecter des vibrations du tube de mesure, les capteurs de vibrations étant disposés le long d'une ligne médiane (10.4) du tube de mesure à des endroits respectivement différents, notamment de telle sorte que le premier capteur de vibrations et le deuxième capteur de vibrations sont disposés symétriquement par rapport au plan de symétrie,
le tube de mesure formant, en présence d'un débit massique, un mode Coriolis avec un noeud de vibration dans la zone du plan de symétrie,
le premier capteur de vibrations étant disposé par rapport au noeud d'oscillation sur un côté d'entrée du tube de mesure,
le deuxième capteur de vibrations étant disposé par rapport au noeud d'oscillation sur un côté de sortie du tube de mesure,
et le troisième capteur de vibrations étant disposé dans la zone du noeud de vibration,
lequel procédé (100) comprend les étapes suivantes :
Mesure d'une première grandeur de mesure au moyen des signaux de mesure du premier capteur de vibrations et du troisième capteur de vibrations (102) et
Mesure d'une deuxième grandeur de mesure au moyen des signaux de mesure du deuxième capteur de vibrations et du troisième capteur de vibrations (103),
**caractérisé en ce que le procédé comprend les étapes supplémentaires suivantes** :
Détermination d'un amortissement des vibrations du tube de mesure (101),
Détermination d'une influence de l'amortissement sur la première grandeur de mesure ainsi que sur la deuxième grandeur de mesure (104),
Formation de différences entre les valeurs mesurées de la première grandeur de mesure et les valeurs mesurées de la deuxième grandeur de mesure (105), de sorte qu'une influence du débit massique sur les différences s'annule,
Vérification d'une correspondance entre la différence et l'amortissement (106).

2. Procédé selon la revendication 1,
pour lequel, en cas de non-correspondance, un type de perturbation est déterminé, une présence d'un écart d'une asymétrie de signaux de mesure des capteurs de vibrations par rapport à une valeur de référence de l'asymétrie étant vérifiée, la vérification tenant compte d'amplitudes des signaux de mesure.

3. Procédé selon la revendication 2,
pour lequel, en présence de l'écart, une mesure de débit massique est basée sur une paire de capteurs de vibrations (12.1, 12.2, 12.3) non perturbés.

4. Procédé selon la revendication 3,
pour lequel l'influence de l'amortissement sur les valeurs mesurées de la première grandeur de mesure ou de la deuxième grandeur de mesure non perturbée est corrigée.

5. Procédé selon l'une des revendications 3 ou 4,
pour lequel, lors de la détermination du capteur de vibrations perturbé, on utilise une amplitude de signal de mesure du troisième capteur de vibrations (12.3) pour déterminer une plausibilité d'une amplitude de signal de mesure du premier capteur de vibrations et une amplitude de signal de mesure du deuxième capteur de vibrations.

6. Procédé selon l'une des revendications 2 à 5,
pour lequel, en présence de la valeur de référence de l'écart à partir d'une mesure d'une non-correspondance entre la différence et l'amortissement, une diminution de l'efficacité de l'excitateur de vibrations (11) ou du capteur de vibrations (12.1, 12.2) est constatée et notamment compensée.

7. Procédé selon l'une des revendications précédentes,
pour lequel l'amortissement est déterminé par un rapport entre le courant d'excitation de l'excitateur de vibrations (11) et l'amplitude de vibration déterminée d'un capteur de vibrations (12.1, 12.2, 12.3).

8. Procédé selon l'une des revendications précédentes,
pour lequel la première grandeur de mesure et la deuxième grandeur de mesure sont respectivement une différence de phase ou une grandeur de mesure qui en est dérivée, telle qu'une différence de temps ou un débit massique.

9. Procédé selon l'une des revendications précédentes 2 à 8,
pour lequel, si l'écart présente une constante de temps inférieure à un mois et notamment inférieure à une semaine, la perturbation est interprétée comme étant causée par un champ magnétique externe dans la zone d'un capteur de vibrations.

10. Procédé selon l'une des revendications précédentes,
pour lequel les capteurs de vibrations (12.1, 12.2, 12.3) ainsi que l'excitateur de vibrations (11) présentent respectivement un système magnétique (13.1) et un système de bobines (13.2), lesquels système magnétique et système de bobines sont mobiles l'un par rapport à l'autre parallèlement à une direction de vibration.

11. Procédé selon l'une des revendications précédentes,
pour lequel le débitmètre Coriolis (1) présente un circuit électronique de mesure/d'exploitation (14), lequel circuit exploite l'excitateur de vibrations, évalue les signaux de mesure des capteurs de vibrations, exécute des étapes de procédé, et calcule et met à disposition des valeurs mesurées de grandeurs de mesure du débitmètre Coriolis

12. Procédé selon l'une des revendications précédentes,
pour lequel un message d'avertissement est émis lorsque les différences entre les valeurs mesurées de la première grandeur de mesure et les valeurs mesurées de la deuxième grandeur de mesure s'écartent d'une valeur attendue relative à la différence calculée entre les valeurs mesurées de la première grandeur de mesure et les valeurs mesurées de la deuxième grandeur de mesure.
